# EUROPEAN PATENT SPECIFICATION

(11) **EP 2 533 595 B1**
(45) Date of publication and mention of the grant of the patent: **21.06.2017**
(21) Application number: 11305691.5
(22) Date of filing: 06.06.2011
(51) Int. Cl.: H04W 72/08, H04W 24/10, H04W 72/04, H04W 92/20

(54) **Apparatuses and methods for inter-cell interference coordination**
Vorrichtungen und Verfahren zur Koordinierung der Interferenz zwischen Zellen
Appareils et procédés pour une coordination des interférences intercellulaires

(43) Date of publication of application: 12.12.2012
(73) Proprietor: ALCATEL LUCENT, 92100 Boulogne-Billancourt (FR)
(72) Inventor: Boccardi, Federico, 20063 Milano (IT); Wild, Thorsten, 70435 Stuttgart (DE)
(74) Representative: Menzietti, Domenico

(56) References cited:
- WO-A2-2009/129413
- US-A1- 2010 087 203
- NTT DOCOMO: "Downlink Interference Coordination Between eNodeB and Home eNodeB", 3GPP DRAFT; R4-093203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050354272, [retrieved on 2009-08-18]
- TSG-RAN WG1: "LS on additional RSRP trigger for ICIC", 3GPP DRAFT; R3-082423_R1-083272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080918, 18 September 2008 (2008-09-18), XP050323709, [retrieved on 2008-09-18]
- RENESAS MOBILE EUROPE LTD: "Considerations on demodulation and CSI requirements for eICIC", 3GPP DRAFT; R4-113137, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Barcelona, Spain; 20110509, 11 May 2011 (2011-05-11), XP050502914, [retrieved on 2011-05-16]
- ALCATEL-LUCENT ET AL: "Estimation of extended PMI feedback signalling required for user intra-cell and inter-cell coordination", 3GPP DRAFT; R1-100419_ESTIM_PMI_FDBCK_SIG_USER_PCOOR5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418069, [retrieved on 2010-01-12]

## Description

Embodiments of the present invention relate to mobile communication networks, more particularly but not exclusively to interference coordination in heterogeneous networks.

### Background

Nowadays, mobile communication networks heterogeneous architectures become more and more important. Heterogeneous Networks (HetNets) are networks which utilize cell types of different sizes, as for example macro cells, pico cells, and femto cells. Such cells are established by base station transceivers for which their coverage areas are determined by their transmission power and interference condition. Pico cells and femto cells are cells having a smaller coverage area than macro cells. In some network scenarios the small cells' coverage area can be surrounded by the coverage area of a macro cell. The small cells can be deployed to extend the capacity of the network. With regard to standardization, within the 3rd Generation Partnership Project (3GPP), HetNets have been added to the scope of the Long Term Evolution-Advanced (LTE-A) work item. Since the cells or base stations in such networks may utilize the same frequency resources such architectures can suffer from interference created by the overlapping coverage areas of these cells. Therefore enhanced Inter-Cell Interference Coordination (ICIC) for co-channel HetNet deployment is one of the key techniques for LTE Release 10 (Rel-10). Co-channel HetNets comprise macro cells and small cells operating on the same frequency channel. Such deployments present some specific interference scenarios for which ICIC techniques are utilized.

In one example scenario, the small cells are pico cells, which are open to users of the macro cell network. In order to ensure that such pico cells carry a useful share of the total traffic load, User Equipment (UE), which are also called mobile transceivers, may be programmed or configured to associate preferentially with the pico cells rather than the macro cells, for example by biasing the Signal-to-Interference-and-Noise Ratio (SINR) threshold at which they will select a pico cell to associate with. Under such conditions, UEs near the edge of a pico cell's coverage area may suffer strong interference from one or more macro cells. In order to alleviate such interference, some subframes may be configured as "blank" or "almost blank" in a macro cell. A blank subframe may contain no transmission from the macro cell, while an "almost blank" subframe typically contains no data transmission and little or no control signaling transmission, but may contain reference interference to the macro cell UEs when these macro cell UEs come close to the femto base station transceivers, however, without having the possibility to associate with them. It may then be beneficial for the macro cells to indicate to their UEs the subframes in which they should make resource specific measurements, i.e. the subframes in which interference from one or more femto cells is reduced or absent. In the following, a base station transceiver may also be referred to as eNodeB (eNB) according to the 3GPP terminology.

Deploying femto cells on the same carrier as the macro cells may create an interference problem. Under a Frequency Division Duplex (FDD) assumption, the main problem happens in downlink transmissions, where the femto cell can create a strong interference over the macro-UE.

Femto cell concepts may use a Self Organizing Network (SON) algorithm at the femto side. For example, in an indoor scenario, femto cells can use a long-term power control algorithm together with directional antennas, to direct the power towards an internal part of a building, while avoiding leakage through the windows. Macro cells may suffer from such interference, especially as femto cell deployment may not be known in advance. Femto cells may be deployed in private environments.

ICIC is an approach for femto cell interference coordination that needs standardization and which works in the frequency dimension. Another concept is to change the deployment paradigm, by allowing open-access of the macro UEs to the femto cells. Unfortunately, not all the operators are open in adapting this solution.

Document WO 2009/129413 A2 discloses a method for Inter-Cell Interference Coordination (ICIC) by a home evolved NodeB (HeNB). A portion of bandwidth is reserved for user equipment. Notification of the reserved portion of bandwidth is sent to at least one potentially interfering evolved NodeB (eNB). A data exchange is performed with the UE using the reserved portion of bandwidth. Notification is sent to the potentially interfering eNBs releasing the reserved portion of bandwidth.

In Document R4-093203 of 3GPP TSG RAN Working Group 4 an inter-cell interference coordination protocol based on adaptive resource partitioning to reduce interference of HeNB's on a macro-cell's downlink is proposed. A UE measures the signals from a HeNB and reports to the macro NB. The macro NB signals a High Interference Indicator (HII) message to the HeNB, which refrains from using the resources indicated by the HII message.

Document R1-083272 of 3GPP TSG RAN WG3 discloses different trigger options for measurement reports of a UE. It is suggested that the UE reports when the signals of a neighboring cell become worse than an offset from the signals of the serving cell and that the UE reports when the signals of the neighboring cell become better than an offset from the signals of the serving cell.

Document R4-113137 of 3GPP TSG RAN WG4 discusses a framework for demodulation and Channel State Information (CSI) requirements for an enhanced ICIC (eICIC). Several transmission modes for demodulation, configurations for reference symbols, and configurations for blank and almost-blank sub-frames are considered. Furthermore, choices for patterns for CSI and demodulation are discussed.

3GPP TSG RAN WG #59bis meeting contribution R1-100419 describes a proposal for Precoding Matrix Index feedback signaling in intra- and inter-cell scenarios.

### Summary

The invention is defined in the independent claims. Embodiments of the invention are defined in the dependent claims. Embodiments can be based on the finding that an interference situation in a macro-femto HetNet can be improved by allowing macro-UEs to report to the serving macro BSs interference information about the small cells in their vicinity. The macro BSs can exploit this report by coordinating scheduling and resource allocation with the interfering small cells.

Embodiments can be based on the finding, that in a "Worst-Companion" (WC) manner, a mobile transceiver may report information on the interference condition from a small cell it experiences. The "worst-companion" is to be understood as the worst configuration of the small base station for the respective mobile station, for example, a spatial precoding configuration, which would generate the worst interference condition at the mobile transceiver when applied at the small base station. Moreover, it is a finding that this information can be tailored to heterogeneous deployments of macro-cell and small-cells. In other words, a mobile transceiver associated with a macro base station may experience interference of the small base station and then report to the macro base station the worst case configuration of the small base station. In embodiments the small base station transceiver can correspond to or be implemented as a femto base station transceiver.

Embodiments can be based on the finding that coordinated scheduling between macro cells and small cells can be established. Embodiments may enable a macro-UE to report to the macro-BS information about the interfering small cells, for example, a delta-SINR feedback. The macro-eNB may decide to communicate with the small cells via a proper network interface to reduce this interference via coordinated scheduling. The small cell may not be known in advance to the operator of the macro cell and therefore not to the macro cell itself, therefore embodiments may enable interference coordination between macro cells and new or unknown small cells.

Embodiments may provide mobile transceivers with a change in the UE feedback report. Similarly to the "worst-companion" concept, a macro UE may, for example, report one or more of the following quantities: an additional Precoding Matrix Index (PMI), an additional Channel Quality Indication (CQI), an indicator of the cell identification (Cell-ID) of the interfering small cell, or an additional rank indicator. This additional report may have a periodicity that is lower than the periodicity of the regular PMI/CQI report. Embodiments may further take advantage of the fact that the small cell is usually serving a small number of users, which may help to stabilize the interference.

Furthermore, embodiments may provide a change in the scheduling/resource allocation procedure carried out by the respective base station transceivers. For example, a macro-eNB may exploit the additional report, by forcing some scheduling constraint to the small-eNBs. For example, the macro-eNB may forbid some precoding vectors to be used in some resource blocks. It could force the small-eNB to be silent on some resource blocks. In embodiments it may force the small-eNB to use semi-persistent scheduling over some specific time-slots.

Embodiments provide an apparatus for a mobile transceiver. It is to be understood that such an apparatus may be integrated or used in a mobile transceiver. Embodiments may thus provide a mobile transceiver comprising the apparatus for the mobile transceiver.

The mobile transceiver is adapted for communicating with a macro base station transceiver in a mobile communication system. The mobile communication system further comprises an interfering small base station transceiver. The small base station transceiver interferes with the macro base station transceiver as it uses the same radio resources for transmission. In other words, the small base station transceiver may use the same time and frequency resources for downlink transmission, i.e. for data transmission from a base station transceiver to a mobile transceiver, as the macro base station transceiver. Therefore, a mobile transceiver being associated with the macro base station transceiver and therefore trying to receive data transmissions from the macro base station transceiver will experience the transmissions from the small base station transceiver on the same radio resources as interference.

The mobile communication system may, for example, correspond to an LTE, an LTE-A, a Universal Mobile Telecommunication System (UMTS), or generally an Orthogonal Frequency Division Multiple Access (OFDMA) network. In embodiments the mobile communication system may correspond to an orthogonal frequency division multiple access system using a plurality of time-slots combined with a plurality of sub-bands for transmitting downlink radio signals. The components described herein, i.e. mobile transceivers and macro/small base station transceivers, may be adapted to comply with any mobile communication standard as for example provided by the standardization bodies of 3^{rd} Generation Partnership Project (3GPP) and 3GPP2.

In embodiments the mobile transceiver may be associated with the macro base station transceiver. Such association determines that the mobile transceiver can receive data transmissions from the macro base station transceiver and that it can transmit data to and through/via the macro base station transceiver. In other words, a radio link is set up between the mobile transceiver and the macro base station transceiver, i.e. a set of parameters and configurations has been set between them in a way that data communication using these parameters and configuration is enabled. In terms of 3GPP a radio link according to a radio link setup protocol procedure is established between them, such that a protocol context exists between them, and such that the macro base station transceiver establishes the serving cell for the mobile transceiver. There is an active link between the mobile transceiver and the macro base station transceiver, such that data can be communicated back and forward between them. In other terminology the mobile transceiver is camped on or registered with the macro base station transceiver. In the following, a mobile transceiver associated with a macro base station transceiver may also be referred to as macro mobile transceiver, correspondingly, a mobile transceiver associated with a small base station transceiver may also be referred to as small mobile transceiver. If it is only referred to a mobile transceiver, association with a macro base station transceiver can be assumed.

In embodiments the small base station transceiver can be configured for denying an association request with the mobile transceiver, e.g. CSG. The small base station transceiver can correspond to a femto base station transceiver. That is to say, although the mobile transceiver may experience better radio conditions for data exchange with the small base station transceiver than with the macro base station transceiver, it cannot associate or establish a radio link to the small base station. Such a situation can be determined by a mobile transceiver carrying out measurements, which may be configured in the mobile transceiver for example by means of RRC measurement configurations in terms of the 3GPP specifications. In some embodiments the small base station transceiver may not be known in advance, which can, for example, occur due to private deployment of a small base station transceiver. A measurement may then be configured relating to any unknown base station transceivers, any unknown small base station transceivers, any co-channel base station transceivers, i.e. base station transceivers which use the same radio resources, etc.

In embodiments the apparatus for the mobile transceiver comprises means for measuring or means to measure a radio signal transmitted by the small base station transceiver to obtain a small cell measurement result. I.e. although the mobile transceiver may not be associated with the small base station transceiver it can still measure radio signals received from the small base station receiver. These radio signals may correspond to pilot or reference signals transmitted by the small base station transceiver. In embodiments these radio signals may correspond to data transmissions between the small base station transceiver and associated small mobile transceivers.

The apparatus for the mobile transceiver further comprises means for providing or means to provide information on the small cell measurement result to the macro base station transceiver. I.e. the apparatus may report information on the outcome of the measurements on the radio signals of the small base station transceiver to the macro base station transceiver. In embodiments the apparatus may further comprise means for analyzing or means to analyze the small cell measurement result. It may comprise means for comparing or to compare a small cell signal level or quality to a threshold. The means for providing the information on the small cell measurement result can be adapted for providing the information on the small cell measurement result to the macro base station transceiver when the small cell signal level exceeds the threshold.

In other words, and also in line with the 3GPP specifications, such a measurement may be configured with an event driven reporting strategy, i.e. an event is defined and, if it occurs, a measurement report is triggered. Such an event may for example be defined as a measurement result exceeding a threshold. In simple words, the mobile transceiver may be configured to report to the macro base station if an interference level of the signals of the small base station is high, i.e. above a threshold. The mobile transceiver may be configured not to report to the macro base station if an interference level of the signals of the small base station is low, i.e. below the threshold. In embodiments other reporting policies can be configured, as for example a periodic reporting policy in which the mobile transceiver reports on the interference level measured on the signals of the small base station periodically.

The small cell signal level can be determined by a Signal-to-Noise Ratio (SNR), a Signal-to-Interference Ratio (SIR), a Signal-to-Interference-and-Noise Ratio (SINR), a Bit Error Rate (BER) or an absolute reception power of a radio signal transmitted by the small base station transceiver. The small cell signal level may be determined by a difference of an SNR, an SIR, an SINR, a BER or an absolute reception power of the radio signal transmitted by the small base station transceiver thereof, relative to a radio signal transmitted by the macro base station transceiver. In other words, if the signal level of the small base station exceeds a certain ratio of the signal level of the macro base station a measurement report may be triggered.

The information on the small cell measurement result may comprise information on a degradation of a signal quality of a signal transmitted by the macro base station. I.e. the mobile transceiver may report on the effect of the small base station transceiver's signal on the macro base station transceiver's signal. For example, the small base station may use a certain radio resource for transmission generating interference to the mobile transceiver. The SIR or SINR experienced by the mobile transceiver on the same radio resource depends on the transmission of the small base station transceiver. The mobile transceiver may report a degradation on the SIR or SINR based on the utilization of said radio resource. In simple words, the mobile transceiver may for example report a degradation of 3dB in the SIR or SINR on a certain sub-band, when the small transmission uses said sub-band. The information on the small cell measurement may be frequency dependent, i.e. it may be provided per sub-band, it may be time-dependent, i.e. it may be provided per time-slot, it may be spatially dependent, i.e. it may be provided per PMI, or it may be provided by a combination thereof.

In embodiments the coverage area of the macro base station transceiver may surround a coverage area of the small base station transceiver. The radio signal transmitted by the small base station transceiver may comprise information on an identification of the small base station transceiver. The means for measuring the radio signal transmitted by the small base station transceiver can be adapted for identifying the radio signal transmitted by the small base station transceiver based on the information on the identification. Such identification may for example correspond to the Cell-ID as part of the 3GPP specifications. Furthermore, the small base station transceiver may use a plurality of transmit antennas for transmission. The small base station transceiver may be adapted for carrying out Multiple-Input-Multiple-Output (MIMO) transmission, for example one of the MIMO concepts disclosed in the 3GPP specifications. The small base station may, for example, be adapted for using a beamforming concept for transmission.

A beamforming concept may, for example, comprise changing the phases and/or amplitudes of transmit signals of multiple transmit antennas at a base station transceiver, such that based on the geometry of the transmit antennas and the respective radio channels between the transmit antennas and a receive antenna, coherent or incoherent superposition of the transmitted signals can be achieved at a certain location, i.e. at the location of a mobile transceiver. The changes in phases and/or amplitudes of the transmit signals may be quantized in a predetermined set, from which a beamforming configuration, i.e. one setting of phase shifts and/or amplitude factors, can be selected. To such a configuration it may also be referred to as a precoding matrix, for which a predetermined set of precoding matrices may be organized in an indexed codebook. To a certain precoding matrix it may therefore be referred to through a precoding matrix index, i.e. a PMI. In embodiments the information on the small cell measurement result may comprise information on a transmission configuration for the plurality of transmit antennas, e.g. a PMI for the small base station, for which the interference is particularly severe. In other words, in embodiments the plurality of transmit antennas at the small base station can be used for different beamforming configurations, a beamforming configuration can be identified by a corresponding precoding configuration and the precoding configurations can be indexed. The information on the small cell measurement result may then comprise a precoding configuration index.

In some embodiments, the information on the small cell measurement result may correspond to a single bit per combination of a time-slot and a sub-band of an OFDMA mobile communication system, indicating whether a signal-to-interference ratio of a radio signal received from the macro base station transceiver relative to the small base station transceiver exceeds a predefined threshold.

Moreover, embodiments provide an apparatus for a macro base station transceiver in a mobile communication system. The apparatus is adapted to be implemented or used in a macro base station transceiver. Embodiments may thus provide a macro base station transceiver comprising the apparatus for the macro base station transceiver.

The macro base station transceiver is adapted for communicating or to communicate with an associated mobile transceiver using a plurality of radio resources. The macro base station transceiver is further adapted for communicating or to communicate with an interfering small base station transceiver. The small base station transceiver is configured for denying an association request with the mobile transceiver. The apparatus for the macro base station transceiver comprises means for receiving or to receive information on a small cell measurement result from the mobile transceiver. The apparatus further comprises means for determining a subset of the plurality of radio resources to be restricted for the small base station transceiver based on the information on the small cell measurement result. In other words, from the available plurality of radio resources the apparatus may restrict a subset for the small base station such that interference generated by the small base station would be limited for the radio resources of the subset. The apparatus further comprises means for communicating or to communicate information on the subset of radio resources to the small base station transceiver.

Taking into account what was described above with respect to the apparatus for the mobile transceiver, embodiments may enable interference coordination at a small base station through a macro base station. The information on the subset of radio resources may comprise transmit power restrictions and/or spatial restrictions on the subset of radio resources. In other words, as part of the information on the subset some precoding matrices may be restricted, e.g. in terms of a transmit power used with them or their utilization may be completely prohibited. In some embodiments the overall transmit power for the small base station may be restricted for a subset of radio resources, e.g. for a subset of sub-bands, a sub-set of time-slots, a subset of PMI or a combination thereof, available in the mobile communication system. Hence, the mobile communication system can be an orthogonal frequency division multiple access system and the plurality of radio resources can correspond to a plurality of time-slots and a plurality of sub-bands. The information on the subset of resources may, for example, correspond to disabling transmission for the small base station transceiver on a subset of the time-slot-sub-band combinations, e.g. transmission may be disabled for every second sub-band.

In embodiments the means for communicating can be adapted for determining information on a load of the small base station transceiver. I.e. the small base station may evaluate and provide its own load condition, for example in terms of the number or ratio of sub-bands utilized for downlink transmission, the utilized transmission power on all or a subset of the radio resources, etc. The means for determining the subset of the plurality of radio resources can be adapted for determining the subset of radio resources to be restricted for the small base station transceiver based on the information on the load. In simpler words, the macro base station transceiver may take the load condition of the small base station into account when determining the subset of restricted resources. I.e. depending on the loads experienced at the macro base station, which may also determine the need for its own radio resources, and the load condition or situation at the small base station transceiver, the macro base station may determine the subset of restricted radio resources for the small base station. In a situation where the load of the macro base station is rather low, it may restrict less radio resources for the small base station and vice versa.

The apparatus for the macro base station transceiver may further comprise means for scheduling or to schedule the mobile transceiver for data transmission from the macro base station transceiver using radio resources being different from the subset of radio resources, which are used by the small base station transceiver. In other words, the macro base station transceiver may restrict the radio resources used by the small base station in an orthogonal way, i.e. such that they utilize different radio resources. In other words, the macro base station transceiver may use the restricted radio resources for its own transmission. Another possible way of restriction is to reduce the radiated transmit power on the respective radio resource, e.g. by N dB.

The means for communicating to the small base station transceiver can be adapted for communicating with the small base station transceiver using a wired backhaul network of the mobile communication system. In some embodiments the "X2"-interface as specified by 3GPP may be used for the communication between the macro and the small base station transceivers. Moreover, the means for communicating can be adapted for further receiving information on a preferred subset of radio resources for transmission from the small base station transceiver. As it has already been described above, the small base station transceiver may determine a set of preferred radio resources, e.g. based on its own load condition or based on a set of radio resources which would provide enhanced transmission characteristics as compared to other radio resources. In the apparatus for the macro base station transceiver the means for determining the subset of radio resources can be adapted for determining the subset of radio resources further based on the preferred subset of radio resources as being informed by the small base station transceiver.

Furthermore, embodiments can provide an apparatus for a small base station transceiver in a mobile communication system. The apparatus can be adapted for being implemented or used in a small base station transceiver. Embodiments may thus provide a small base station transceiver comprising the apparatus for the small base station transceiver.

The small base station transceiver is adapted for communicating with a small mobile transceiver using a plurality of radio resources. The mobile communication system further comprises a macro base station transceiver, which is interfered by the small base station transceiver. The apparatus for the small base station transceiver comprises means for obtaining or to obtain information on a subset of the plurality of radio resources to be restricted for the small base station transceiver from the macro base station transceiver. The apparatus further comprises means for allocating or to allocate radio resources for data transmission to the small mobile transceiver based on the information on the subset of the plurality of radio resources. In other words, the apparatus may, in line with the above description, apply the radio resource restrictions issued by the macro base station transceiver and therewith enable effective interference coordination.

In embodiments the apparatus for the small base station transceiver may further comprise means for identifying or to identify a preferred subset of radio resources from the plurality of radio resources for communicating with the small mobile transceiver. The preferred subset of radio resources may comprise such radio resources for which a transmission to the small mobile transceiver may be advantageous as compared to other radio resources. In other words the preferred resources may enable an efficient data transmission from the small base station to the associated small mobile station. Moreover, the apparatus for the small base station transceiver may comprise means for forwarding or to forward information on the preferred subset of radio resources to the macro base station transceiver, which may take these into account according to the above description. Accordingly, in embodiments the apparatus can comprise means for determining or to determine a load of the small base station transceiver based on the plurality of radio resources and the small mobile transceiver and it may comprise means for forwarding or to forward information on the load of the small base station transceiver to the macro base station transceiver.

Embodiments may provide a mobile communication system, comprising a mobile transceiver with an apparatus for a mobile transceiver according to the above description, and/or a macro base station transceiver with an apparatus for a macro base station transceiver according to the above description, and/or a small base station transceiver comprising the apparatus for a small base station transceiver according to the above description.

Moreover, embodiments may provide a method for a mobile transceiver, the mobile transceiver being adapted for communicating with a macro base station transceiver in a mobile communication system, the mobile communication system further comprising a small base station transceiver. The method comprises a step of measuring a radio signal transmitted by the small base station transceiver to obtain a small cell measurement result and a step of providing information on the small cell measurement result to the macro base station transceiver.

Embodiments may provide a method for a macro base station transceiver in a mobile communication system, the macro base station transceiver being adapted for communicating with a mobile transceiver using a plurality of radio resources and for communicating with a small base station transceiver. The method comprises a step of receiving information on a small cell measurement result from the mobile transceiver and a step of determining a subset of the plurality of radio resources to be restricted for the small base station transceiver based on the information on the small cell measurement result. The method further comprises a step of communicating information on the subset of radio resources to the small base station transceiver.

Embodiments may provide a method for a small base station transceiver in a mobile communication system, the small base station transceiver being adapted for communicating with a small mobile transceiver using a plurality of radio resources, the mobile communication system further comprising a macro base station transceiver. The method comprises a step of obtaining information on a subset of the plurality of radio resources to be restricted for the small base station transceiver from the macro base station transceiver and a step of allocating radio resources for data transmission to the small mobile transceiver based on the information on subset of the plurality of radio resources.

Embodiments may provide a computer program having a program code for performing one of the above described methods, when the computer program is executed on a computer or processor.

In embodiments the small base station transceiver can be a femto base station transceiver.

Embodiments may provide the advantage that there may be no need for complicated distributed scheduling architectures for allowing coordination over a wide area, since the macro base station transceiver can have a scheduling priority over the small base station transceiver. Moreover, the signaling overhead may not be critical in embodiments since the interfering indication can be sent with a lower periodicity. System simulation results showed that adding a WC PMI/Δ-CQI indicator is effective when the interference is spatially constrained to a main average direction, which can be assumed for small base station transceiver deployment. Moreover, in embodiments, small base station transceivers can be assumed to have a smaller number of users than macro base station transceivers, therefore embodiments may provide the advantage that the interference of the small base station transceiver can be easily stabilized. Moreover, in embodiments the macro base station transceiver apparatus may control the mobile transceivers such that only users or mobile transceivers close to small base station transceivers, or with a low SIR, are configured to provide information on the small cell measurement result to the macro base station transceiver.

Furthermore, embodiments may be used for small base station transceivers, which utilize multiple transmit antennas or which utilized only a single transmit antenna. Embodiments of the base station transceiver apparatus may provide the information on the subset of the plurality of radio resources to be restricted for the small base station transceiver such that, some radio resources are completely forced to silence for the small base station transceiver. This may be particularly beneficial if the small base station transceiver only uses a single transmit antenna, although embodiments are not limited to this case.

Moreover, embodiments may provide the advantage of a more efficient radio resource management. The small base station transceiver apparatus can inform the macro base station transceiver on certain preferred semi-static resource allocations and on its traffic load situation. While the macro base station transceiver still has the master role, it can now try to reduce posing restrictions on those preferred resources of the small base station transceiver, additionally taking into account the load of the small base station transceiver.

### Brief description of the Figures

Some other features or aspects will be described using the following non-limiting embodiments of apparatuses and/or methods and/or computer programs by way of example only, and with reference to the accompanying figures, in which
Figure 1 illustrates an example scenario of a mobile communication system comprising embodiments;
Figure 2 shows an embodiment of an apparatus for a mobile transceiver;
Figure 3 shows an embodiment of an apparatus for a macro base station transceiver;
Figure 4 shows an embodiment of an apparatus for a small base station transceiver;
Figure 5 shows a flowchart of an embodiment of a method for a mobile transceiver;
Figure 6 shows a flowchart of an embodiment of a method for a macro base station transceiver; and
Figure 7 shows a flowchart of an embodiment of a method for a small station transceiver.

### Description of some Embodiments

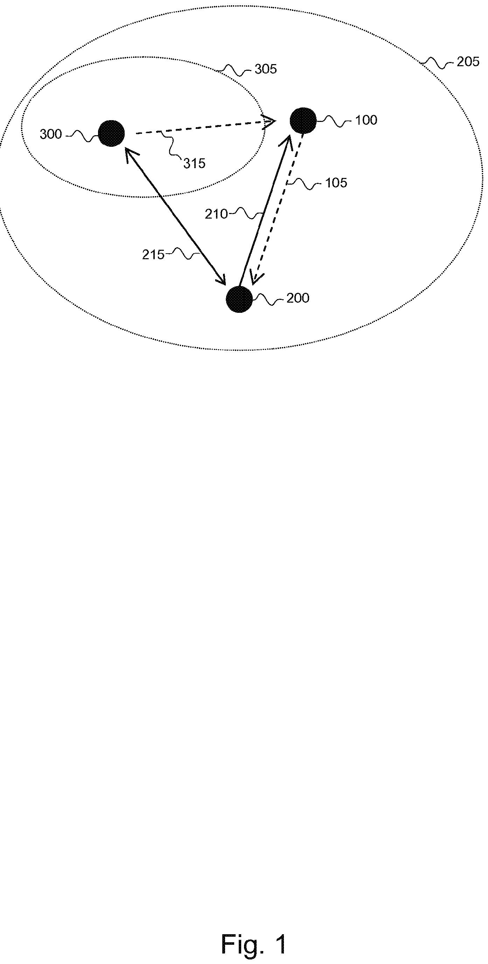

Figure 1 illustrates an example scenario of a mobile communication system for coordinated scheduling and respective information exchange between macro and small cells. The mobile communication system comprises a mobile transceiver apparatus 100, which is assumed to be associated with a macro base station transceiver 200. The coverage area 205 of the macro base station transceiver 200 is indicated by the dotted line 205. Moreover the mobile communication system comprises a small base station transceiver 300 with a coverage area 305, which is indicated by the dotted line 305.

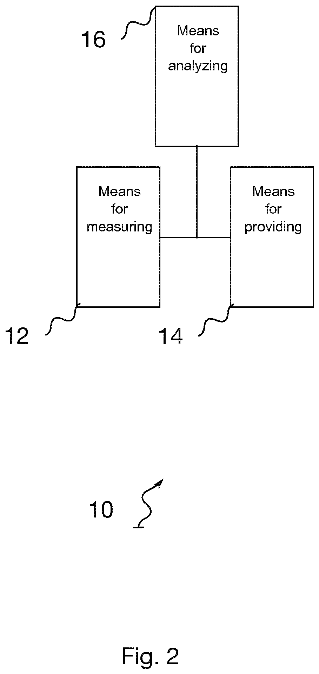

The mobile transceiver 100 is assumed to comprise an embodiment of an apparatus 10 for a mobile transceiver 100 for which the details are depicted in the block diagram of Figure 2. The mobile transceiver 100 is adapted for communicating or to communicate with the macro base station transceiver 200 in the mobile communication system. The mobile transceiver 100 is associated with the macro base station transceiver 200, i.e. the macro base station transceiver 200 transmits data to the mobile transceiver 100, which is indicated by the arrow 210 in Figure 1. The mobile communication system further comprises the interfering small base station transceiver 300, which is configured for denying an association request with the mobile transceiver 100. As shown in Figure 2 the apparatus 10 comprises means for measuring 12 a radio signal transmitted by the small base station transceiver 300 to obtain a small cell measurement result. The signals transmitted by the small base station transceiver 300 are indicated by the arrow 315 in Figure 1 symbolizing the interference generated by small base station transceiver 300. The apparatus 10 further comprises means for providing 14 information on the small cell measurement result to the macro base station transceiver 200. The provision of the information on the small cell measurement result is indicated by the arrow 105 in Figure 1. In Figure 1 it is assumed that the mobile transceiver 100 provides the information on the small cell measurement result via uplink feedback signaling 105. In further embodiments the small base station transceiver 300 can correspond to a femto base station transceiver 300.

Figure 2 further depicts that in embodiments the apparatus 10 may further comprise means for analyzing 16 the small cell measurement result and for comparing a small cell signal level to a threshold. The means for providing 14 the information on the small cell measurement result can be adapted for providing the information on the small cell measurement result to the macro base station transceiver 200 when the small cell signal level exceeds the threshold. In other words the uplink signaling indicated in Figure 1 by arrow 105 may only take place when a certain interference level of the small base station transceiver 300 is measured by the mobile transceiver 100.

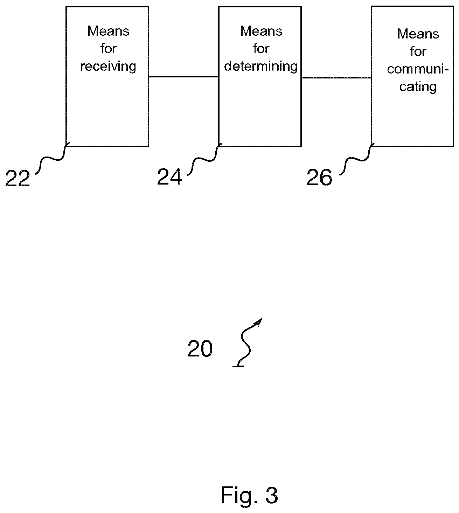

In Figure 1 it is further assumed that the macro base station transceiver 200 comprises an apparatus 20 for a macro base station transceiver 200, the details of an embodiment of which are depicted in the block diagram in Figure 3. In line with the above the macro base station transceiver 200 is adapted for communicating with the associated mobile transceiver 100 using a plurality of radio resources. The macro base station transceiver 200 is also adapted for communicating with the interfering small base station transceiver 300, which is indicated in Figure 1 by the arrow 215 and which may for example be implemented in terms of backhaul signaling.

As shown in Figure 3 the apparatus 20 comprises means for receiving 22 information on a small cell measurement result from the mobile transceiver 100, cf. also 105 in Figure 1. As further depicted in Figure 3 the apparatus 20 comprises means for determining 24 a subset of the plurality of radio resources to be restricted for the small base station transceiver 300 based on the information on the small cell measurement result. The information on the subset of radio resources may comprise transmit power restrictions and/or spatial restrictions on the subset of radio resources. In embodiments the apparatus 20 may further comprise means for scheduling the mobile transceiver 100 for data transmission from the macro base station transceiver 200 using radio resources being different from the subset of radio resources, e.g. to avoid interference by using orthogonal subsets of radio resource at the small and the macro base station transceivers 300, 200. In other words, after having restricted the radio resources used by the small base station transceiver 300, the macro base station transceiver 200 may only use radio resources for its own transmissions, which are different from the radio resources used by the small base station transceiver 300. The apparatus 20 further comprises means for communicating 26 information on the subset of radio resources to the small base station transceiver 300. The means for communicating 26 to the small base station transceiver 300 can be adapted for communicating with the small base station transceiver 300 using a backhaul network of the mobile communication system, as e.g. the X2-interface in an LTE or LTE-A compliant mobile communication network. This backhaul network can be wired (e.g. using fiber-optical communication) or wireless, e.g. be based on a point-to-point microwave radio system.

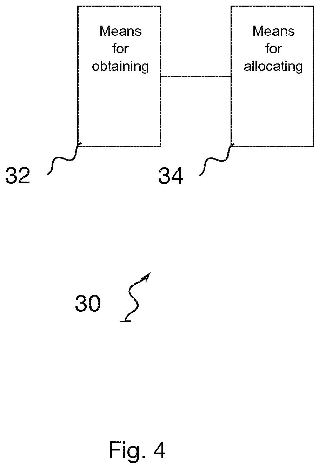

In Figure 1 it is further assumed that the small base station transceiver 300 comprises an apparatus 30 for a macro base station transceiver 300, the details of an embodiment of which are depicted in the block diagram in Figure 4. Figure 4 depicts an embodiment of an apparatus 30 for a small base station transceiver 300 in the mobile communication system according to Figure 1. The small base station transceiver 300 is adapted for communicating with a small mobile transceiver using the plurality of radio resources. In the downlink, the signals from the base station transceiver 200 arriving at the mobile station transceiver 100 are interfered by the small base station transceiver 300, which is indicated by the arrow 315 in Figure 1. In embodiments the small base station transceiver 300 can be realized as a femto base station transceiver 300.

Referring to the embodiment depicted in Figure 4, the apparatus 30 for the small base station transceiver 300 comprises means for obtaining 32 information on a subset of the plurality of radio resources to be restricted for the small base station transceiver 300 from the macro base station transceiver 200. According to the above the means for obtaining 32 can be adapted for obtaining the information using a wired backhaul network of the mobile communication system, as e.g. the X2-interface in an LTE or LTE-A compliant mobile communication network. Furthermore, the apparatus 30 comprises means for allocating 34 radio resources for data transmission to the small mobile transceiver based on the information on the subset of the plurality of radio resources.

Coming back to the system overview in Figure 1, it can be generally stated that the macro base station transceiver 200 coordinates or restricts 215 the radio resources utilized by the small base station transceiver 300 based on the information on the small cell measurement result 105 received from the mobile transceiver 200, in order to limit the interference 315 generated by the small base station transceiver 300 at the mobile transceiver 100 for the data transmission 210 of the macro base station transceiver.

Some further advantages may arise from the way the information provided by the mobile transceiver 100, the apparatus 10, respectively, is determined. The radio signal transmitted by the small base station transceiver 300 may comprise information on an identification of the small base station transceiver 300. The means for measuring 12 the radio signal transmitted by the small base station transceiver 300 can be adapted for identifying the radio signal transmitted by the small base station transceiver 300 based on the information on the identification. Therewith, an unknown small base station transceiver 300 may be identified by the mobile transceiver 100. The means for providing 14 can be adapted for providing the identification or information thereon to the macro base station transceiver 200, which may in turn identify a previously unknown or new small base station transceiver 300. The identification e.g. in LTE may be performed on a full search on the primary and secondary synchronization channels over all possible cell IDs.

In embodiments, the small cell signal level can be determined in terms of an SNR, an SIR, an SINR, an BER, or an absolute reception power of the radio signal transmitted by the small base station transceiver 300 and/ or by a difference thereof relative to a radio signal transmitted by the macro base station transceiver 200. For example, the information on the small cell measurement result may include a "worst companion", i.e. a radio resource which would generate the highest interference at the mobile transceiver 100. Such a radio resource may for example correspond to a certain time slot, a sub-band, a beamforming configuration, a precoding configuration, a channelization or spreading code, or a combination thereof, respectively.

In embodiments, the small base station transceiver 300 may use a plurality of transmit antennas for transmission and the information on the small cell measurement result may comprise information on a transmission configuration for the plurality of transmit antennas. The plurality of transmit antennas can be used for different beamforming configurations, a beamforming configuration can, for example, be identified by a corresponding precoding configuration. The precoding configurations can be indexed and the information on the small cell measurement result may comprise a precoding configuration index.

The information on the small cell measurement result may comprise information on a degradation of a signal quality of the signal transmitted by the macro base station transceiver 200, i.e. the mobile transceiver 100 may report information on how much an SNR, an SIR, an SINR, a BER, etc. would deteriorate if the small base station transceiver 300 used a particular radio resource.

The described macro-small or macro femto network scenario provides some differences to a macro-macro case. In the macro-small or macro-femto case, embodiments of the macro base station transceiver 200 can have a scheduling priority over the small base station transceiver 300. Therefore, embodiments may provide the advantage that no complicated distributed scheduling architectures for allowing coordination over a wide area are needed and the implementation complexity is reduced.

In embodiments the reporting of the small cell measurement results can be event driven, i.e. upon exceedance of a threshold information on the small cell measurement result may be provided by the mobile transceiver 100, or it may be periodically. In some embodiments the interfering indication, i.e. the information on the small cell measurement result, can be sent with a lower periodicity than for example regular measurement report for handover purposes. System simulation results showed that adding a WC PMI/Δ-CQI indicator, i.e. reporting the worst companion precoding matrix index together with associated channel quality degradation, is effective when the interference is spatially constrained to a main average direction. In other words simulation results showed that if an angular spread of the radio signals transmitted by the small base station transceiver 300 is low, i.e. spatially focused, the WC PMI/ Δ-CQI information as information on the small cell measurement result provided results indicating improved system capacity. Such assumption can be made for small base station transceiver deployment. Embodiments may therewith take advantage of small base station transceivers 300 having smaller coverage areas 305 and usually serve a smaller number of users than macro base station transceivers 200, which helps in stabilizing the interference.

Furthermore, embodiments may provide the advantage that only the macro-users, i.e. macro mobile transceivers 100, may report the interference information, i.e. the information on the small cell measurement result. Moreover, a macro eNB, i.e. the macro base station transceiver 200, may decide to enable this type of report only for users or mobile transceivers close to small cells or with a low SIR. In embodiments the small calls may be femto cells.

Embodiments may enable interference coordination to both multiple-antenna and single-antenna small cells. In case of single-antenna small base station transceivers, the macro base station transceiver could, for example, force the small base station transceiver to silence during some Resource Blocks (RB). An RB may correspond to a combination of a time-slot and a sub-band in an OFDMA system.

In further embodiments, the apparatus 30 for the small base station transceiver may comprise means for identifying a preferred subset of radio resources from the plurality of radio resources for communicating with the small mobile transceiver, i.e. resources which are preferred for intra small cell communication. The apparatus 30 may further comprise means for forwarding information on the preferred subset of radio resources to the macro base station transceiver. Generally the apparatus 30 may also comprise means for determining a load of the small base station transceiver 300 based on the plurality of radio resources and the small mobile transceiver. It may further comprise means for forwarding information on the load of the small base station transceiver 300 to the macro base station transceiver 200.

On the macro base station transceiver 200 side in the apparatus 20, the means for communicating 26 can be adapted for determining information on a load of the small base station transceiver 300. The means for determining 24 the subset of the plurality of radio resources can be adapted for determining the subset of radio resources to be restricted for the small base station transceiver 300 based on the information on the load. The means for communicating 26 can be adapted for further receiving information on a preferred subset of radio resources for transmission from the small base station transceiver 300. Thus, the means for determining 24 the subset of radio resources can be adapted for determining the subset of radio resources further based on the preferred subset of radio resources. In other words, the small base station transceiver 300 can inform the macro base station transceiver 200 on certain preferred semi-static resource allocations and on its traffic load situation. While the macro base station transceiver 200 still has the master role, it can now try to reduce posing restrictions on those preferred resources of the small base station transceiver 300, additionally taking into account the load of the small base station transceiver 300. Embodiments may be adapted to interwork with ICIC according to the 3GPP specifications for LTE Release 10.

In embodiments the macro UE, i.e. the mobile transceiver 100, may generate classical feedback for Downlink (DL) transmission for its serving cell, e.g. compliant with 3GPP LTE release 10, via Uplink (UL) feedback signaling. In addition the mobile transceiver 100 may provide additional new feedback, in terms of the information on the small cell measurement result, for example, based on the measured DL interference channel from the interfering small base station 300.

In embodiments, this feedback may only be required in case the small base station transceiver 300 is of significant receive power level, i.e. event driven reporting may be used. Otherwise the information may not be transmitted in order to save feedback overhead. In case the small base station transceiver 300 is equipped with multiple transmit antennas, the feedback may also comprise information on the spatial channel, as e.g. an index corresponding to a precoding vector causing the strongest interference. The feedback may also provide information on the interference level, e.g. relative to the useful signal receive from the macro base station transceiver 200, which may be mapped to a CQI value or relative change in a CQI value, i.e. "delta CQI" or Δ-CQI. The information on the measurement result can be frequency selective or for the whole frequency band. In order to save overhead, in embodiments the result can also be time-averaged and information thereon may be transmitted less frequent than the classical feedback for the serving cell.

In a low-complexity embodiment for a frequency selective feedback, a 1 bit information per PRB/subband could serve as information on the small cell measurement result. It could indicate whether a time-averaged interfering signal from the small base station transceiver 300 significantly degrades DL data transmission performance of the serving cell, i.e. the macro base station transceiver 200, or not. Significantly can e.g. be defined as loss of e.g. at least 3dB in terms of SINR. In other words, the mobile communication system may correspond to an orthogonal frequency division multiple access system using a plurality of time-slots combined with a plurality of sub-bands for transmitting downlink radio signals. The information on the small cell measurement result may correspond to a single bit per combination of a time-slot and a sub-band indicating whether a signal-to-interference ratio of a radio signal received from the macro base station transceiver 200 relative to the small base station transceiver 300 exceeds a predefined threshold.

Based on the obtained feedback information, the macro base station transceiver 200 can now make its scheduling decisions. In order to avoid worst case interference situations it can pose restrictions to the small base station transceiver via backhaul signaling, e.g. using the X2-interface in LTE terminology.

The restrictions can be constraints on the used transmit power per resource, in more extreme embodiments silencing certain time-frequency resources may be used. Furthermore, the restrictions may comprise certain spatial processing, e.g. avoiding certain PMIs. In the reverse direction of the backhaul, the small base station transceiver 300 can inform the macro base station transceiver 200 on certain preferred, e.g. semi-static, resource allocations, e.g. time-frequency resources for persistent scheduling or stationary/nomadic users with high channel gains on those frequencies. While the macro base station transceiver 200 would still have the master role, it can now try to reduce posing restrictions on those preferred resources of the small base station transceiver 300.

In embodiments a pure master role of the macro base station transceiver 200 may allow to reduce the coordination delays, which should be low in order to harvest gains, by skipping negotiation or multiple steps of distributed scheduling. Instead, the small base station transceiver 300 obeys the restrictions from its master macro base station transceiver 200.

In some embodiments only non-frequency selective feedback information from the macro mobile transceiver 100 may be available, for example, either due to required low rate feedback or higher velocities of the macro UE, again a 1 bit information may be used on whether the interfering small base station transceiver 300 is hurting significantly or not, i.e. if the transmissions of the small base station transceiver 300 degrade the reception quality of the receive signals from the macro base station transceiver 200. If yes, the macro base station transceiver 200 can e.g. silence the small base station transceiver 300 on each second resource and use the intermediate ones for its own data transmission. In embodiments of the apparatus 20 for the mobile transceiver 200 the plurality of radio resources may correspond to a plurality of time-slots and a plurality of sub-bands and the information on the subset of resources corresponds to disabling transmission for the small base station transceiver 300 for every second sub-band.

In other embodiments, the restriction can be adapted depending on the amount of traffic available at the small base station transceiver 300. In this case, in an embodiment the macro base station transceiver 200 may poll information on the current load of the small base station transceiver 300 via backhaul and may silence the amount of resources as a function of the load of the small base station transceiver 300. E.g., when there is only low load at the small base station transceiver 300, the macro base station transceiver 200 can silence a large amount of the small resources.

In further embodiments, the apparatus 10 for the mobile transceiver 100 may report other information on the small cell measurement result when a severe interference situation has changed, for example, because the mobile transceiver 100 has moved further away from the small base station transceiver 300 or the load of the small base station transceiver 300 has decreased. In other words, because of the reporting of a severe interference situation by the mobile transceiver 100, the macro base station transceiver 200 may restrict the radio resources for the small base station transceiver 300. In a similar manner the mobile transceiver may report when such a situation has cleared, such that the macro base station transceiver 100 can release the restrictions from the small base station transceiver 300, e.g. by backhaul signaling. In other embodiments each restriction of resources may expire after a predefined period. In other words, the small base station transceiver 300 can be configured to utilize its full plurality of radio resources after a certain time after reception of the information on the subset of radio resources, when no further restriction is received. In other embodiments the macro base station transceiver 200 may provide a validity time to the small base station transceiver together with the information on the subset of radio resources after which the restriction expires.

Furthermore, embodiments may provide a mobile transceiver 100 comprising the apparatus 10 according to the above description, and/or a macro base station transceiver 200 comprising the apparatus 20 according to the above description, and/or a small base station transceiver apparatus 300 comprising the apparatus 30 according to the above description. Embodiments may further provide a mobile communication system, comprising a mobile transceiver 100 with an apparatus 10 according to the above description, and/or a macro base station transceiver 200 with an apparatus 20 according to the above description, and/or a small base station transceiver 300 comprising the apparatus 30 according to the above description. In embodiments the small base station transceiver 300 can correspond to a femto base station transceiver 300.

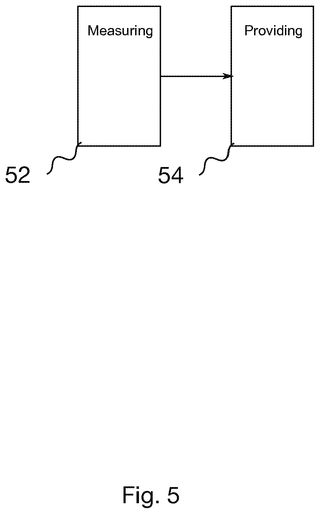

Figure 5 shows a flowchart of an embodiment of a method for a mobile transceiver. The mobile transceiver 100 is adapted for communicating with a macro base station transceiver 200 in a mobile communication system and the mobile communication system further comprises a small base station transceiver 300. The method comprises a step of measuring 52 a radio signal transmitted by the small base station transceiver 300 to obtain a small cell measurement result and a step of providing 54 information on the small cell measurement result to the macro base station transceiver 200.

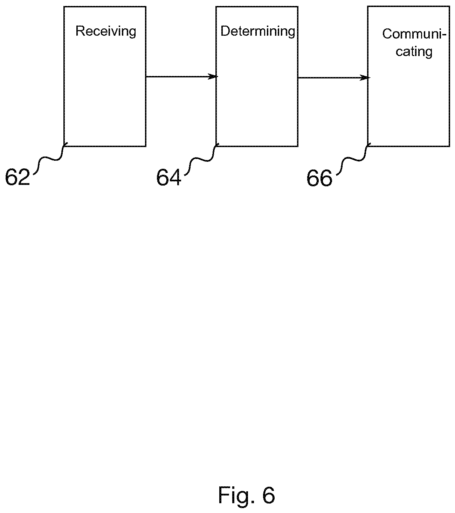

Figure 6 shows a flowchart of an embodiment of a method for a macro base station transceiver. The macro base station transceiver 200 is adapted for communicating with a mobile transceiver 100 using a plurality of radio resources and for communicating with a small base station transceiver 300. The method comprises a step of receiving 62 information on a small cell measurement result from the mobile transceiver 100 and a step of determining 64 a subset of the plurality of radio resources to be restricted for the small base station transceiver 300 based on the information on the small cell measurement result. The method further comprises a step of communicating 66 information on the subset of radio resources to the small base station transceiver 300.

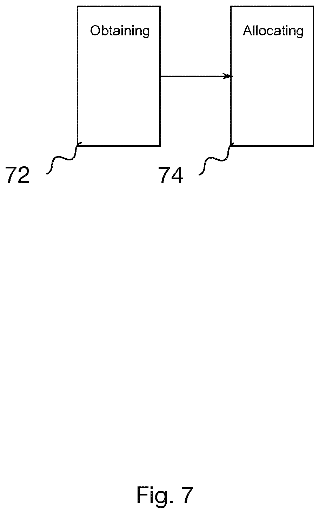

Figure 7 shows a flowchart of an embodiment of a method for a small station transceiver 300. The small base station transceiver 300 is adapted for communicating with a small mobile transceiver using a plurality of radio resources. The mobile communication system also comprises a macro base station transceiver 200. The method comprises a step of obtaining 72 information on a subset of the plurality of radio resources to be restricted for the small base station transceiver 300 from the macro base station transceiver 200 and a step of allocating 74 radio resources for data transmission to the small mobile transceiver based on the information on subset of the plurality of radio resources.

Moreover, embodiments may provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for measuring", "means for providing", "means for analyzing", "means for receiving", "means for transmitting", "means for determining", "means for communicating", "means for obtaining", "means for allocating", "means for scheduling", "means for forwarding", etc. may be provided through the use of dedicated hardware, such as "a measurer", "a provider", "an analyzer", "a receiver", "a determiner", "a transmitter", "a communicator", "an obtainer", "an allocator", "a scheduler", "a forwarder", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a mobile transceiver (100), the mobile transceiver (100) being adapted for communicating with a macro base station transceiver (200) in a mobile communication system, the mobile communication system further comprising an interfering small base station transceiver (300), the mobile transceiver (100) being associated with the macro base station transceiver (200), the apparatus (10) comprising
means for measuring (12) a radio signal transmitted by the small base station transceiver (300) to obtain a small cell measurement result, wherein the small cell base station transceiver (300) uses a plurality of transmit antennas for transmission; and
means for providing (14) information on the small cell measurement result to the macro base station transceiver (200), wherein the information on the small cell measurement result comprises information on a transmission configuration for the plurality of transmit antennas, **characterised in that** the information on the small cell measurement result corresponds to a single bit per combination of a time-slot and a sub-band indicating whether a small cell signal level exceeds a predefined threshold.

2. The apparatus (10) of claim 1, wherein the information on the small cell measurement result comprises information on a radio resource, which generates a highest interference level at the mobile transceiver (100).

3. The apparatus (10) of claim 2, wherein the small cell signal level is determined by a signal-to-noise ratio, a signal-to-interference ratio, a signal-to-noise-and-interference ratio, a bit error rate or an absolute reception power of the radio signal transmitted by the small base station transceiver (300) or by a difference thereof relative to a radio signal transmitted by the macro base station transceiver (200), and wherein the information on the small cell measurement result comprises information on a degradation of a signal quality of a signal transmitted by the macro base station transceiver 200.

4. The apparatus (10) of claim 1, wherein the plurality of transmit antennas is used for different beamforming configurations, a beamforming configuration being identified by a corresponding precoding configuration, wherein the precoding configurations are indexed and wherein the information on the small cell measurement result comprises a precoding configuration index.

5. The apparatus (10) of claim 1, wherein the mobile communication system corresponds to an orthogonal frequency division multiple access system using a plurality of time-slots combined with a plurality of sub-bands for transmitting downlink radio signals, and wherein the information on the small cell measurement result corresponds to a single bit per combination of a time-slot and a sub-band indicating whether a signal-to-interference ratio of a radio signal received from the macro base station transceiver (200) relative to the small base station transceiver (300) exceeds a predefined threshold.

6. An apparatus (20) for a macro base station transceiver (200) in a mobile communication system, the macro base station transceiver (200) being adapted for communicating with an associated mobile transceiver (100) using a plurality of radio resources and for communicating with an interfering small base station transceiver (300), the apparatus (20) comprising
means for receiving (22) information on a small cell measurement result from the mobile transceiver (100), wherein the small base station transceiver (300) uses a plurality of transmit antennas for transmission and wherein the information on the small cell measurement result comprises information on a transmission configuration for the plurality of transmit antennas;
means for determining (24) a subset of the plurality of radio resources to be spatially restricted for the small base station transceiver (300) based on the information on the small cell measurement result; and
means for communicating (26) information on the subset of radio resources to the small base station transceiver (300), wherein the information on the subset of radio resources comprises spatial restrictions on the subset of radio resources, **characterised in that** the information on the small cell measurement result corresponds to a single bit per combination of a time-slot and a sub-band indicating whether a small cell signal level exceeds a predefined threshold.

7. The apparatus (20) of claim 6, wherein the mobile communication system is an orthogonal frequency division multiple access system and the plurality of radio resources corresponds to a plurality of time-slots and a plurality of sub-bands, wherein the information on the subset of resources corresponds to disabling transmission for the small base station transceiver (300) for every second subband, and wherein the apparatus (20) further comprises means for scheduling the mobile transceiver (100) for data transmission from the macro base station transceiver (200) using radio resources being different from the subset of radio resources.

8. The apparatus (20) of claim 6, wherein the means for communicating (26) to the small base station transceiver (300) is adapted for communicating with the small base station transceiver (300) using a wired backhaul network of the mobile communication system, and wherein the means for communicating (26) is adapted for further receiving information on a preferred subset of radio resources for transmission from the small base station transceiver (300) or for determining information on a load of the small base station transceiver (300), and wherein the means for determining (24) the subset of radio resources is adapted for determining the subset of radio resources to be restricted for the small base station transceiver (300) based on the information on the load or based on the preferred subset of radio resources and wherein the small base station transceiver (300) corresponds to a femto base station transceiver (300).

9. A communication system comprising a mobile transceiver (100) comprising the apparatus (10) of claim 1, and a macro base station transceiver (200), comprising the apparatus (20) of claim 6.

10. A method for a mobile transceiver (100), the mobile transceiver (100) being adapted for communicating with a macro base station transceiver (200) in a mobile communication system, the mobile communication system further comprising a small base station transceiver (300), the method comprising measuring (52) a radio signal transmitted by the small base station transceiver (300) to obtain a small cell measurement result, wherein the small base station transceiver (300) uses a plurality of transmit antennas for transmission; and providing (54) information on the small cell measurement result to the macro base station transceiver (200), wherein the information on the small cell measurement result comprises information on a transmission configuration for the plurality of transmit antennas, **characterised in that** the information on the small cell measurement result corresponds to a single bit per combination of a time-slot and a sub-band indicating whether a small cell signal level exceeds a predefined threshold.

11. A method for a macro base station transceiver (200) in a mobile communication system, the macro base station transceiver (200) being adapted for communicating with a mobile transceiver (100) using a plurality of radio resources and for communicating with a small base station transceiver (300), the method comprising
receiving information on a small cell measurement result from the mobile transceiver (100), wherein the small base station transceiver (300) uses a plurality of transmit antennas for transmission and wherein the information on the small cell measurement result comprises information on a transmission configuration for the plurality of transmit antennas;
determining a subset of the plurality of radio resources to be spatially restricted for the small base station transceiver (300) based on the information on the small cell measurement result; and
communicating information on the subset of radio resources to the small base station transceiver (300), wherein the information on the subset of radio resources comprises spatial restrictions on the subset of radio resources, **characterised in that** the information on the small cell measurement result corresponds to a single bit per combination of a time-slot and a sub-band indicating whether a small cell signal level exceeds a predefined threshold.

12. A computer program having a program code for performing one of the methods of claims 10 or 11, when the computer program is executed on a computer or processor.

## Patentansprüche

1. Vorrichtung (10) für einen mobilen Sendeempfänger (100), wobei der mobile Sendeempfänger (100) ausgelegt ist für die Kommunikation mit einem Makrobasisstations-Sendeempfänger (200) in einem mobilen Kommunikationssystem, wobei das mobile Kommunikationssystem weiterhin einen störenden kleinzelligen Basisstations-Sendeempfänger (300) umfasst, wobei der mobile Sendeempfänger (100) mit dem Makrobasisstations-Sendeempfänger (200) assoziiert ist, wobei die Vorrichtung (10) umfasst:
ein Mittel zum Messen (12) eines Funksignals, das von dem kleinzelligen Basisstations-Sendeempfänger (300) übermittelt wird, um ein Kleinzellen-Messergebnis zu erhalten, wobei der kleinzellige Basisstations-Sendeempfänger (300) eine Vielzahl von Sendeantennen für die Übertragung benutzt; und
ein Mittel zum Bereitstellen (14) von Informationen zum Kleinzellen-Messergebnis für den Makrobasisstations-Sendeempfänger (200), wobei die Informationen zu dem Kleinzellen-Messergebnis Informationen zu einer Übertragungskonfiguration für die Vielzahl von Sendeantennen umfassen,
**dadurch gekennzeichnet, dass**
die Informationen zum Kleinzellen-Messergebnis einem Einzelbit pro Kombination eines Zeitschlitzes und eines Subbands entsprechen, wobei besagtes Einzelbit angibt, ob eine Kleinzellen-Signalstärke einen vordefinierten Grenzwert überschreitet.

2. Die Vorrichtung (10) nach Anspruch 1, wobei die Informationen zum Kleinzellen-Messergebnis Informationen zu einem Funkbetriebsmittel umfassen, welches einen höchsten Störpegel am mobilen Sendeempfänger (100) verursacht.

3. Die Vorrichtung (10) nach Anspruch 2, wobei die Kleinzellen-Signalstärke anhand eines Signal-Rausch-Abstands, eines Signal-Interferenz-Abstands, eines Signal-Rausch-und-Interferenz-Abstands, einer Bitfehlerrate oder einer absoluten Empfangsstärke des von dem kleinzelligen Basisstations-Sendeempfänger (300) gesendeten Funksignals bestimmt wird, oder anhand einer Differenz zwischen diesem und einem von dem Makrobasisstations-Sendeempfänger (200) gesendeten Funksignal, und wobei die Informationen zum Kleinzellen-Messergebnis Informationen zu einer Degradierung der Signalqualität eines Signals umfassen, das von dem Makrobasisstations-Sendeempfänger (200) übermittelt wird.

4. Die Vorrichtung (10) nach Anspruch 1, wobei die Vielzahl von Sendeantennen für verschiedene Strahlformungskonfigurationen benutzt wird, wobei eine Strahlformungskonfiguration von einer entsprechenden Vorcodierungskonfiguration identifiziert wird, wobei die Vorcodierungskonfigurationen indiziert sind und wobei die Informationen zu dem Kleinzellen-Messergebnis einen Vorcodierungskonfigurationsindex umfassen.

5. Die Vorrichtung (10) nach Anspruch 1, wobei das mobile Kommunikationssystem ein orthogonales Frequenzmultiplex-Zugangssystem ist, welches zur Übermittlung von Downlink-Funksignalen eine Vielzahl von Zeitschlitzen in Kombination mit einer Vielzahl von Subbändern verwendet, und wobei die Informationen zum Kleinzellen-Messergebnis einem Einzelbit pro Kombination eines Zeitschlitzes und eines Subbands entsprechen, wobei die Einzelbits angeben, ob ein Signal-Interferenz-Anstand eines von dem Makrobasisstations-Sendeempfänger (200) empfangenen Funksignals gegenüber dem kleinzelligen Basisstations-Sendeempfänger (300) einen vordefinierten Grenzwert überschreitet.

6. Vorrichtung (20) für einen Makrobasisstations-Sendeempfänger (200) in einem mobilen Kommunikationssystem, wobei der Makrobasisstations-Sendeempfänger (200) ausgelegt ist für das Kommunizieren mit einem assoziierten mobilen Sendeempfänger (100) unter Verwendung einer Vielzahl von Funkbetriebsmitteln und für das Kommunizieren mit einem störenden kleinzelligen Basisstations-Sendeempfänger (300), wobei die Vorrichtung (20) umfasst:
ein Mittel zum Empfang (22) von Informationen zu einem Kleinzellen-Messergebnis von dem mobilen Sendeempfänger (100), wobei der kleinzellige Basisstations-Sendeempfänger (300) eine Vielzahl von Sendeantennen für die Übertragung verwendet und wobei die Informationen zu dem Kleinzellen-Messergebnis Informationen zu einer Übertragungskonfiguration für die Vielzahl von Sendeantennen umfassen;
ein Mittel zum Bestimmen (24) eines Teilsatzes aus der Vielzahl von Funkbetriebsmitteln, die auf der Grundlage der Informationen zu dem Kleinzellen-Messergebnis räumlich für den kleinzelligen Basisstations-Sendeempfänger (300) zu beschränken sind; und
ein Mittel zum Kommunizieren (26) von Informationen zu dem Teilsatz von Funkbetriebsmitteln an den kleinzelligen Basisstations-Sendeempfänger (300), wobei die Informationen zu dem Teilsatz von Funkbetriebsmitteln räumliche Beschränkungen für den Teilsatz von Funkbetriebsmitteln umfassen,
**dadurch gekennzeichnet, dass**
die Informationen zum Kleinzellen-Messergebnis einem Einzelbit pro Kombination eines Zeitschlitzes und eines Subbands entsprechen, wobei besagtes Einzelbit angibt, ob eine Kleinzellen-Signalstärke einen vordefinierten Grenzwert überschreitet.

7. Die Vorrichtung (20) nach Anspruch 6, wobei das mobile Kommunikationssystem ein orthogonales Frequenzmultiplex-Zugangssystem ist und die Vielzahl von Funkbetriebsmitteln einer Vielzahl von Zeitschlitzen und einer Vielzahl von Subbändern entspricht, wobei sich die Informationen zu dem Teilsatz von Betriebsmitteln auf das Deaktivieren von Übermittlungen für den kleinzelligen Basisstations-Sendeempfänger (300) für jedes zweite Subband beziehen, und wobei die Vorrichtung (20) weiterhin Mittel für das Einplanen des mobilen Sendeempfängers (100) für Datenübermittlungen von dem Makrobasisstations-Sendeempfänger (200) unter Verwendung von anderen Funkbetriebsmitteln als denen umfasst, die den Teilsatz von Funkbetriebsmitteln bilden.

8. Die Vorrichtung (20) nach Anspruch 6, wobei das Mittel für das Kommunizieren (26) an den kleinzelligen Basisstations-Sendeempfänger (300) ausgelegt ist für das das Kommunizieren mit dem kleinzelligen Basisstations-Sendeempfänger (300) unter Verwendung eines Backhaul-Festnetzes des mobilen Kommunikationssystems, und wobei das Mittel für das Kommunizieren (26) dafür ausgelegt ist, um weiterhin Informationen zu einem bevorzugten Teilsatz von Funkbetriebsmitteln für die Übermittlung von dem kleinzelligen Basisstations-Sendeempfänger (300) zu empfangen oder um Informationen zu einer Last des kleinzellige Basisstations-Sendeempfängers (300) zu bestimmen, und wobei das Mittel für das Bestimmen (24) des Teilsatzes von Funkbetriebsmitteln ausgelegt ist für das Bestimmen des Teilsatzes von Funkbetriebsmitteln, die für den kleinzellige Basisstations-Sendeempfänger (300) zu beschränken sind, was auf der Grundlage der Informationen zur Last oder auf der Grundlage des bevorzugten Teilsatzes von Funkbetriebsmitteln erfolgt, und wobei der kleinzellige Basisstations-Sendeempfänger (300) einem Femtozellen-Basisstations-Sendeempfänger (300) entspricht.

9. Kommunikationssystem, einen mobilen Sendeempfänger (100) umfassend, welcher die Vorrichtung (10) nach Anspruch 1 umfasst, und weiterhin einen Makrobasisstations-Sendeempfänger (200) umfassend, welcher die Vorrichtung (20) nach Anspruch 6 umfasst.

10. Verfahren für einen mobilen Sendeempfänger (100), wobei der mobile Sendeempfänger (100) ausgelegt ist für die Kommunikation mit einem Makrobasisstations-Sendeempfänger (200) in einem mobilen Kommunikationssystem, wobei das mobile Kommunikationssystem weiterhin einen kleinzelligen Basisstations-Sendeempfänger (300) umfasst, wobei das Verfahren umfasst:
das Messen (52) eines Funksignals, das von dem kleinzelligen Basisstations-Sendeempfänger (300) übermittelt wird, um ein Kleinzellen-Messergebnis zu erhalten, wobei der kleinzellige Basisstations-Sendeempfänger (300) eine Vielzahl von Sendeantennen für die Übertragung benutzt; und
das Bereitstellen (54) von Informationen zum Kleinzellen-Messergebnis für den Makrobasisstations-Sendeempfänger (200), wobei die Informationen zu dem Kleinzellen-Messergebnis Informationen zu einer Übertragungskonfiguration für die Vielzahl von Sendeantennen umfassen,
**dadurch gekennzeichnet, dass**
die Informationen zum Kleinzellen-Messergebnis einem Einzelbit pro Kombination eines Zeitschlitzes und eines Subbands entsprechen, wobei besagtes Einzelbit angibt, ob eine Kleinzellen-Signalstärke einen vordefinierten Grenzwert überschreitet.

11. Verfahren für einen Makrobasisstations-Sendeempfänger (200) in einem mobilen Kommunikationssystem, wobei der Makrobasisstations-Sendeempfänger (200) ausgelegt ist für das Kommunizieren mit einem mobilen Sendeempfänger (100) unter Verwendung einer Vielzahl von Funkbetriebsmitteln und für das Kommunizieren mit einem kleinzelligen Basisstations-Sendeempfänger (300), wobei das Verfahren umfasst:
den Empfang von Informationen zu einem Kleinzellen-Messergebnis von dem mobilen Sendeempfänger (100), wobei der kleinzellige Basisstations-Sendeempfänger (300) eine Vielzahl von Sendeantennen für die Übertragung verwendet und wobei die Informationen zu dem Kleinzellen-Messergebnis Informationen zu einer Übertragungskonfiguration für die Vielzahl von Sendeantennen umfassen;
das Bestimmen eines Teilsatzes aus der Vielzahl von Funkbetriebsmitteln, die auf der Grundlage der Informationen zu dem Kleinzellen-Messergebnis räumlich für den kleinzelligen Basisstations-Sendeempfänger (300) zu beschränken sind; und
das Kommunizieren von Informationen zu dem Teilsatz von Funkbetriebsmitteln an den kleinzelligen Basisstations-Sendeempfänger (300), wobei die Informationen zu dem Teilsatz von Funkbetriebsmitteln räumliche Beschränkungen für den Teilsatz von Funkbetriebsmitteln umfassen,
**dadurch gekennzeichnet, dass**
die Informationen zum Kleinzellen-Messergebnis einem Einzelbit pro Kombination eines Zeitschlitzes und eines Subbands entsprechen, wobei besagtes Einzelbit angibt, ob eine Kleinzellen-Signalstärke einen vordefinierten Grenzwert überschreitet.

12. Computerprogramm mit einem Programmcode für das Ausführen eines der Verfahren nach den Ansprüchen 10 oder 11, wenn das Computerprogramm auf einem Computer oder in einem Prozessor ausgeführt wird.

## Revendications

1. Appareil (10) pour un émetteur-récepteur mobile (100), l'émetteur-récepteur mobile (100) étant adapté pour communiquer avec un émetteur-récepteur de macro station de base (200) dans un système de communication mobile, le système de communication mobile comprenant en outre un émetteur-récepteur de petite station de base interférant (300), l'émetteur-récepteur mobile (100) étant associé à l'émetteur-récepteur de macro station de base (200), l'appareil (10) comprenant
des moyens pour mesurer (12) un signal radio émis par l'émetteur-récepteur de petite station de base (300) pour obtenir un résultat de mesure de petite cellule, l'émetteur-récepteur de petite station de base (300) utilisant une pluralité d'antennes d'émission pour l'émission ; et
des moyens pour fournir (14) des informations sur le résultat de mesure de petite cellule à l'émetteur-récepteur de macro station de base (200), les informations sur le résultat de mesure de petite cellule comprenant des informations sur une configuration d'émission pour la pluralité d'antennes d'émission,
**caractérisé en ce que**
les informations sur le résultat de mesure de petite cellule correspondent à un seul bit par combinaison d'un créneau temporel et d'une sous-bande indiquant si un niveau de signal de petite cellule dépasse un seuil prédéfini.

2. Appareil (10) selon la revendication 1, selon lequel les informations sur le résultat de mesure de petite cellule comprennent des informations sur une ressource radio, qui génère un niveau d'interférence le plus élevé au niveau de l'émetteur-récepteur mobile (100).

3. Appareil (10) selon la revendication 2, dans lequel le niveau de signal de petite cellule est déterminé par un rapport signal sur bruit, un rapport signal sur interférence, un rapport signal sur bruit et interférence, un taux d'erreur binaire ou une puissance de réception absolue du signal radio émis par l'émetteur-récepteur de petite station de base (300) ou par une différence de celui-ci par rapport à un signal radio émis par l'émetteur-récepteur de macro station de base (200), et dans lequel les informations sur le résultat de mesure de petite cellule comprennent des informations sur une dégradation d'une qualité de signal d'un signal émis par l'émetteur-récepteur de macro station de base (200).

4. Appareil (10) selon la revendication 1, dans lequel la pluralité d'antennes d'émission est utilisée pour des configurations de formation de faisceau différentes, une configuration de formation de faisceau étant identifiée par une configuration de précodage correspondante, dans lequel les configurations de précodage sont indexées et dans lequel les informations sur le résultat de mesure de petite cellule comprennent un indice de configuration de précodage.

5. Appareil (10) selon la revendication 1, dans lequel le système de communication mobile correspond à un système d'accès multiple par répartition en fréquence orthogonale utilisant une pluralité de créneaux temporels combinée avec une pluralité de sous-bandes pour émettre des signaux radio de liaison descendante, et dans lequel les informations sur le résultat de mesure de petite cellule correspondent à un seul bit par combinaison d'un créneau temporel et d'une sous-bande indiquant si un rapport signal sur interférence d'un signal radio reçu en provenance de l'émetteur-récepteur de macro station de base (200) par rapport à l'émetteur-récepteur de petite station (300) dépasse un seuil prédéfini.

6. Appareil (20) pour un émetteur-récepteur de macro station de base (200) dans un système de communication mobile, l'émetteur-récepteur de macro station de base (200) étant adapté pour communiquer avec un émetteur-récepteur mobile associé (100) en utilisant une pluralité de ressources radio et pour communiquer avec un émetteur-récepteur de petite station de base interférant (300), l'appareil (20) comprenant
des moyens pour recevoir (22) des informations sur un résultat de mesure de petite cellule en provenance de l'émetteur-récepteur mobile (100), l'émetteur-récepteur de petite station de base (300) utilisant une pluralité d'antennes d'émission pour l'émission et les informations sur le résultat de mesure de petite cellule comprenant des informations sur une configuration d'émission pour la pluralité d'antennes d'émission ;
des moyens pour déterminer (24) un sous-ensemble de la pluralité de ressources radio devant être restreint spatialement pour l'émetteur-récepteur de petite station de base (300) sur la base des informations sur le résultat de mesure de petite cellule ; et
des moyens pour communiquer (26) des informations sur le sous-ensemble de ressources radio à l'émetteur-récepteur de petite station de base (300), les informations sur le sous-ensemble de ressources radio comprenant des restrictions spatiales sur le sous-ensemble de ressources radio,
**caractérisé en ce que**
les informations sur le résultat de mesure de petite cellule correspondent à un seul bit par combinaison d'un créneau temporel et d'une sous-bande indiquant si un niveau de signal de petite cellule dépasse un seuil prédéfini.

7. Appareil (20) selon la revendication 6, dans lequel le système de communication mobile est un système d'accès multiple par répartition en fréquence orthogonale et la pluralité de ressources radio correspond à une pluralité de créneaux temporels et une pluralité de sous-bandes, dans lequel les informations sur le sous-ensemble de ressources correspondent à une désactivation d'émission pour l'émetteur-récepteur de petite station de base (300) pour une sous-bande sur deux, et l'appareil (20) comprenant en outre des moyens pour ordonnancer l'émetteur-récepteur mobile (100) pour la transmission de données depuis l'émetteur-récepteur de macro station de base (200) en utilisant des ressources radio qui sont différentes du sous-ensemble de ressources radio.

8. Appareil (20) selon la revendication 6, dans lequel les moyens pour communiquer (26) à l'émetteur-récepteur de petite station de base (300) sont adaptés pour communiquer avec l'émetteur-récepteur de petite station de base (300) en utilisant un réseau d'amenée filaire du système de communication mobile, et dans lequel les moyens pour communiquer (26) sont adaptés pour recevoir en outre des informations sur un sous-ensemble de ressources radio préféré pour la transmission depuis l'émetteur-récepteur de petite station de base (300) ou pour déterminer des informations sur une charge de l'émetteur-récepteur de petite station de base (300), et dans lequel les moyens pour déterminer (24) le sous-ensemble de ressources radio sont adaptés pour déterminer le sous-ensemble de ressources radio devant être restreint pour l'émetteur-récepteur de petite station de base (300) sur la base des informations sur la charge ou sur la base du sous-ensemble de ressources radio préféré et dans lequel l'émetteur-récepteur de petite station de base (300) correspond à un émetteur-récepteur de femto station de base (300).

9. Système de communication comprenant un émetteur-récepteur mobile (100) comprenant l'appareil (10) selon la revendication 1, un émetteur-récepteur de macro station de base (200), comprenant l'appareil (20) selon la revendication 6.

10. Procédé pour un émetteur-récepteur mobile (100), l'émetteur-récepteur mobile (100) étant adapté pour communiquer avec un émetteur-récepteur de macro station de base (200) dans un système de communication mobile, le système de communication mobile comprenant en outre un émetteur-récepteur de petite station de base (300), le procédé comprenant les étapes suivantes
mesurer (52) un signal radio émis par l'émetteur-récepteur de petite station de base (300) pour obtenir un résultat de mesure de petite cellule, l'émetteur-récepteur de petite station de base (300) utilisant une pluralité d'antennes d'émission pour l'émission ; et
fournir (54) des informations sur le résultat de mesure de petite cellule à l'émetteur-récepteur de macro station de base (200), les informations sur le résultat de mesure de petite cellule comprenant des informations sur une configuration d'émission pour la pluralité d'antennes d'émission,
**caractérisé en ce que**
les informations sur le résultat de mesure de petite cellule correspondent à un seul bit par combinaison d'un créneau temporel et d'une sous-bande indiquant si un niveau de signal de petite cellule dépasse un seuil prédéfini.

11. Procédé pour un émetteur-récepteur de macro station de base (200) dans un système de communication mobile, l'émetteur-récepteur de macro station de base (200) étant adapté pour communiquer avec un émetteur-récepteur mobile (100) en utilisant une pluralité de ressources radio et pour communiquer avec un émetteur-récepteur de petite station de base (300), le procédé comprenant les étapes suivantes
recevoir des informations sur un résultat de mesure de petite cellule en provenance de l'émetteur-récepteur mobile (100), l'émetteur-récepteur de petite station de base (300) utilisant une pluralité d'antennes d'émission pour l'émission et les informations sur le résultat de mesure de petite cellule comprenant des informations sur une configuration d'émission pour la pluralité d'antennes d'émission ;
déterminer un sous-ensemble de la pluralité de ressources radio devant être restreint spatialement pour l'émetteur-récepteur de petite station de base (300) sur la base des informations sur le résultat de mesure de petite cellule ; et communiquer des informations sur le sous-ensemble de ressources radio à l'émetteur-récepteur de petite station de base (300), les informations sur le sous-ensemble de ressources radio comprenant des restrictions spatiales sur le sous-ensemble de ressources radio,
**caractérisé en ce que**
les informations sur le résultat de mesure de petite cellule correspondent à un seul bit par combinaison d'un créneau temporel et d'une sous-bande indiquant si un niveau de signal de petite cellule dépasse un seuil prédéfini.

12. Programme informatique ayant un code de programme pour effectuer l'un des procédés selon les revendications 10 ou 11, lorsque le programme informatique est exécuté sur un ordinateur ou un processeur.
